(19) Europäisches Patentamt
European Patent Office
Office européen des brevets

(11) **EP 3 859 591 A1**

(12) **EUROPEAN PATENT APPLICATION**
published in accordance with Art. 153(4) EPC

(43) Date of publication:
**04.08.2021 Bulletin 2021/31**

(51) Int Cl.:
***G06K 9/00*** *(2006.01)*

(21) Application number: **18935299.0**

(22) Date of filing: **26.12.2018**

(86) International application number:
**PCT/CN2018/123787**

(87) International publication number:
**WO 2020/062671 (02.04.2020 Gazette 2020/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.09.2018 CN 201811121965**

(71) Applicant: **One Connect Smart Technology Co., Ltd. (Shenzhen)**
**Shenzhen, Guangdong 518000 (CN)**

(72) Inventor: **HUANG, Wenyang**
**Shenzhen, Guangdong 518000 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **IDENTITY IDENTIFICATION METHOD, COMPUTER-READABLE STORAGE MEDIUM, TERMINAL DEVICE, AND APPARATUS**

(57)    The present application relates to the field of computer technologies, and particularly to an identity recognition method, a computer-readable storage medium, a terminal device, and an apparatus. The method comprises: collecting face images and performing face recognition on the face images; collecting a face image sequence if face recognition is successful, wherein the face image sequence comprises F face images, where F is an integer greater than 1; calculating a matching degree of the face image sequence and a preset reference image sequence, wherein the reference image sequence comprises F face images, and expressions in at least two face images are different; determining that identity recognition successes if the matching degree of the face image sequence and the preset reference image sequence is greater than a preset matching degree threshold. Since the reference image sequence contains the face images with different expressions, the identity recognition fails even if the illegal people obtains a photo of the legitimate user, therefore the security is greatly improved.

FIG. 1

**Description**

The present application claims priority of Chinese patent application No. 201811121965.0 filed to the state intellectual property office of China on 26 September 2018 and entitled "an identity recognition method, a computer-readable storage medium and a terminal device", the content of which is incorporated herein in its entity by reference.

TECHNICAL FIELD

The present application relates to the field of computer technologies, and particularly to an identity recognition method, a computer-readable storage medium, a terminal device, and an apparatus.

BACKGROUND

Face-based biometric recognition still faces some challenges with respect to applications. Among them, the most prominent challenge is the security of the recognition system. As an apparatus for identity recognition, it can be easily utilized by an illegal person impersonating a legitimate user, and most of the current face recognition systems are unable to distinguish real faces and photos. As long as the photo of the legitimate user is obtained, this type of recognition system can be easily fooled, therefore is provided with low security.

TECHNICAL PROBLEM

Given this, embodiments of the present application provide an identity recognition method, a computer-readable storage medium, a terminal device, and an apparatus, so as to solve the problem that the current identity recognition methods are provided with low security.

TECHNICAL SOLUTIONS

A first aspect of embodiments of the present application provides an identity recognition method, which may comprise:

collecting face images and performing face recognition on the face images;

collecting a face image sequence if face recognition is successful, wherein the face image sequence comprises F face images, where F is an integer greater than 1;

calculating a matching degree of the face image sequence and a preset reference image sequence, wherein the reference image sequence comprises F face images, and expressions in at least two face images are different;

determining that identity recognition successes if the matching degree of the face image sequence and the preset reference image sequence is greater than a preset matching degree threshold.

A second aspect of embodiments of the present application provides a computer-readable storage medium with a computer-readable instruction stored thereon, and the computer-readable instruction, when executed by a processor, implements the steps of the above identity recognition method.

A third aspect of embodiments of the present application provides a terminal device, which comprises a memory, a processor, and a computer-readable instruction stored in the memory and executable on the processor, and the processor, when executing the computer-readable instruction, implements the steps of the above identity recognition method.

A fourth aspect of embodiments of the present application provides an identity recognition apparatus, which may comprise modules configured to implement the steps of the above identity recognition method.

BENEFICIAL EFFECTS

On the basis of conventional face recognition, the embodiments of the present application further collect a series of multiple face images, that is, the face image sequences, and calculate the matching degrees of the face image sequences and the preset reference image sequence, and determine that the identity recognition successes only when two image sequences are relatively similar, that is, the matching degree of the two image sequences is greater than the preset matching degree threshold. Since the reference image sequence contains the face images with different expressions, the identity recognition fails even if the illegal people obtains a photo of the legitimate user, therefore the security is greatly improved.

## DESCRIPTION OF THE DRAWINGS

FIG. 1 is an exemplary flowchart of an identity recognition method in an embodiment of the present application.

FIG. 2 is a schematic flowchart of selecting a reference image sequence from an image sequence set.

FIG. 3 is a schematic flowchart of calculating a matching degree between the $f$-th face image in a face image sequence and the $f$-th face image in the reference image sequence.

FIG. 4 is a schematic diagram of calculating feature distances of the $f$-th face image in the face image sequence.

FIG. 5 is an exemplary structure diagram of an identity recognition apparatus in an embodiment of the present application.

FIG. 6 is a schematic block diagram of a terminal device in an embodiment of the present application.

## IMPLEMENTATIONS OF THE INVENTION

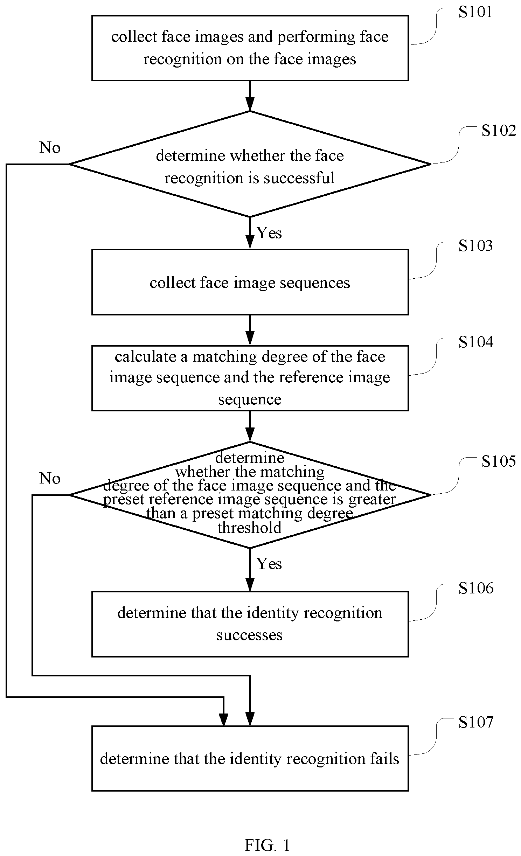

Referring to FIG. 1, an embodiment of the identity recognition method in the embodiments of the present application may include the following.

Step S101: collect face images, and perform face recognition on the face images.

In this embodiment, the face images of a current user may be collected through a front camera of a terminal device such as a mobile phone, a tablet computer, etc., and the face images are performed face recognition through various existing face recognition methods. Since the face recognition is a relatively common existing technology, its specific process will not be repeated herein again.

Step S102: determine whether the face recognition is successful.

If the face recognition is successful, then step S103 and subsequent steps are executed. If the face recognition fails, then step S107 is executed.

Step S103: collect face image sequences.

An image sequence set is preset in the terminal device, and the image sequence set includes N groups of image sequences containing face images, and N is an integer greater than 1. Each group of image sequence includes F face images, and expressions in at least two face images are different, and F is an integer greater than 1.

For example, assuming that the value of F is equal to 3, the expressions in the face images of the first image sequence may respectively be {smiling, curling lip, frowning}, the expressions in the face images of the second image sequence may respectively be {pouting, closing eyes, smiling}, and the expressions in the face images of the third image sequence may respectively be {raising eyebrows, smiling, curling lip}, ...... , and the like.

Each time when the identity recognition is performed, the terminal device automatically selects one group of image sequence from the image sequence set as a basis for the identity recognition, that is, a reference image sequence.

In one of the specific implementations, the selection may be performed sequentially according to a sequence identifier. For example, when the identity recognition is performed for the first time, the first image sequence may be selected, and when the identity recognition is performed for the second time, the second image sequence may be selected, ......, and the like. However, there is a disadvantage in this method, that is, the image sequence selected at each time may be guessed in advance, which may provide an opportunity for a lawbreaker.

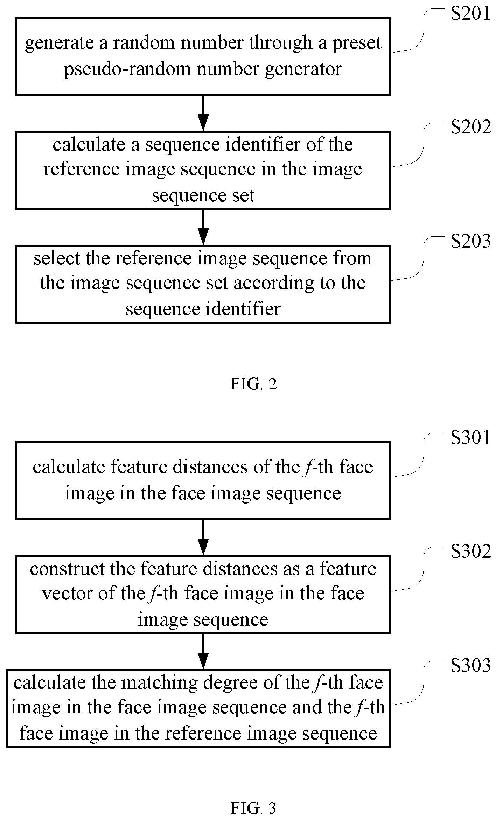

In this embodiment, the steps as shown in FIG. 2 are preferably adopted to select the reference image sequence from the image sequence set:

Step S201: generate a random number through a preset pseudo-random number generator.

Real random numbers are generated through physical phenomena, such as throwing a coin or a dice, turning a wheel, noise by using an electronic component, nuclear fission, and so on. Such random number generators are called physical random number generators, and their disadvantage is that they require a relatively high technology. In practical applications, pseudo-random numbers are often sufficient. These series of numbers are "seemingly" random numbers, but in fact they are generated through a fixed and repeatable calculation method. They are not truly random because they can actually be calculated, but they have statistical characteristics similar to the random numbers.

Step S202: calculate a sequence identifier of the reference image sequence in the image sequence set.

Specifically, the sequence identifier of the reference image sequence in the image sequence set may be calculated according to the following formula:

$$EmoSeqNum = MOD(RandomNum, N)$$

where, *MOD* is a remainder function, *RandomNum* is the random number, *N* is the total number of the image sequences in the image sequence set, and *EmoSeqNum* is the sequence identifier of the reference image sequence in the image sequence set.

Step S203: select the reference image sequence from the image sequence set according to the sequence identifier.

After the reference image sequence is selected, the terminal device will prompt the user to make corresponding expressions step by step according to the reference image sequence, and the specific prompt mode may be a text prompt or a voice prompt.

For example, if the expressions in the face images of the selected reference image sequence are respectively: {smiling, curling lip, frowning}, the terminal device first sends out the voice prompt "please make a smiling expression", and then collects the user's face image at this time (recorded as the first face image); the terminal device again sends out the voice prompt "please make an expression of curling lip", and then collects the user's face image at this time (recorded as the second face image); and the terminal device finally sends out the voice prompt "please make a frowning expression", and then collects the user's face image at this time (recorded as the third face image).

The collected face images compose a sequence shown as the following form: {the first face image, the second face image, the third face image, ......}, and the face image sequence also includes F face images.

Step S104: calculate a matching degree of the face image sequence and the reference image sequence.

Specifically, a matching degree of an *f*-th face image in the face image sequence and an *f*-th face image in the reference image sequence may be calculated first according to the steps as shown in FIG. 3, where $1 \le f \le F$.

Step S301: calculate feature distances of the *f*-th face image in the face image sequence.

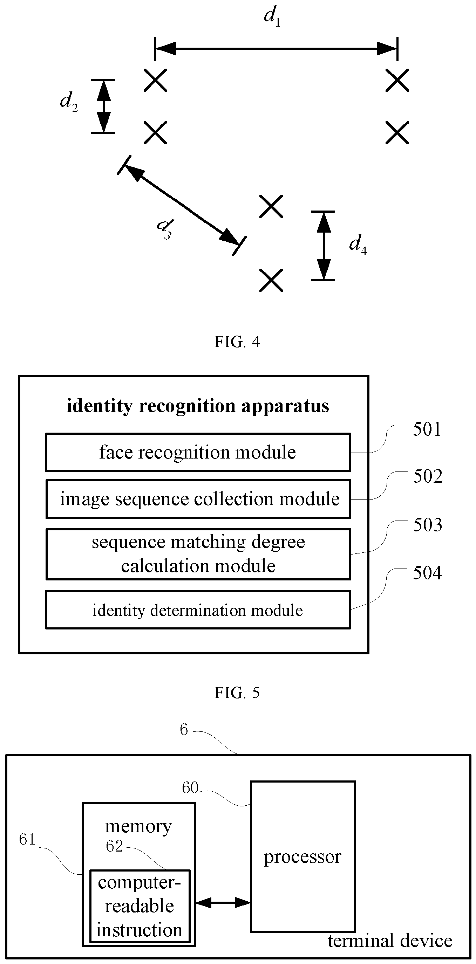

The feature distance is a distance between center points of any two feature regions (which may be respectively recorded as the first feature region and the second feature region). The feature region may include, but is not limited to, the area where the eyebrows are located, the area where the eyes are located, the area where the nose is located, the area where the mouth is located, etc., as shown in FIG. 4, the $\times$ in the figure denotes the center point of the feature area of the face image, and the distance between the center points of any two feature areas is the feature distance, such as $d_1$, $d_2$, $d_3$, $d_4$, etc. as shown in the figure.

Specifically, each of the feature distances of the *f*-th face image in the face image sequence may be calculated according to the following formula:

$$FtVal_{f,m} = \sqrt{\left(AveXL_{f,m} - AveXR_{f,m}\right)^2 + \left(AveYL_{f,m} - AveYR_{f,m}\right)^2}$$

$$= \sqrt{\left(\frac{\sum_{ln=1}^{LN_{f,m}} xl_{f,m,ln}}{LN_{f,m}} - \frac{\sum_{rn=1}^{RN_{f,m}} xr_{f,m,rn}}{RN_{f,m}}\right)^2 + \left(\frac{\sum_{ln=1}^{LN_{f,m}} yl_{f,m,ln}}{LN_{f,m}} - \frac{\sum_{rn=1}^{RN_{f,m}} yr_{f,m,rn}}{RN_{f,m}}\right)^2}$$

where $LN_{f,m}$ is the number of pixels in the first feature area of the *f*-th face image in the face image sequence, $(xl_{f,m,ln}, yl_{f,m,ln})$ is the coordinate of the *ln*-th pixel point in the first feature area, $1 \le ln \le LN_{f,m}$, $RN_{f,m}$ is the number of pixels in the second feature area of the *f*-th face image in the face image sequence, $(xr_{f,m,rn}, yr_{f,m,rn})$ is the coordinate of the *rn*-th pixel point of the first feature area, $1 \le rn \le RN_{f,m}$, $(AveXL_{f,m}, AveYL_{f,m})$ is the coordinate of the center point of the first

$$AveXL_{f,m} = \frac{\sum_{ln=1}^{LN_{f,m}} xl_{f,m,ln}}{LN_{f,m}} \qquad AveYL_{f,m} = \frac{\sum_{ln=1}^{LN_{f,m}} yl_{f,m,ln}}{LN_{f,m}}$$

feature area, and , $(AveXR_{f,m}, AveYR_{f,m})$ is the coordinate of

$$AveXR_{f,m} = \frac{\sum_{rn=1}^{RN_{f,m}} xr_{f,m,rn}}{RN_{f,m}} \qquad AveYR_{f,m} = \frac{\sum_{rn=1}^{RN_{f,m}} yr_{f,m,rn}}{RN_{f,m}}.$$

the center point of the second feature region, and

Step S302: construct the feature distances as a feature vector of the $f$-th face image in the face image sequence.

Specifically, the feature distances may be constructed as the feature vector of the $f$-th face image in the face image sequence according to the following formula:

$$FeatureVec_f = (FtVal_{f,1}, FtVal_{f,2}, ..., FtVal_{f,m}, ..., FtVal_{f,M})$$

where $m$ is the serial number of the feature distance, $1 \leq m \leq M$, and $M$ is the total number of the feature distances, and $FtVal_{f,m}$ is the $m$-th feature distance of the $f$-th face image in the face image sequence.

Step S303: calculate the matching degree of the $f$-th face image in the face image sequence and the $f$-th face image in the reference image sequence.

Specifically, the matching degree of the $f$-th face image in the face image sequence and the $f$-th face image in the reference image sequence may be calculated according to the following formula:

$$SimDeg_f = 1 - \frac{Abs\{\sum_{m=1}^{M}[(FtVal_{f,m} - \frac{\sum_{m=1}^{M} FtVal_{f,m}}{M}) \times (StdVal_{f,m} - \frac{\sum_{m=1}^{M} StdVal_{f,m}}{M})]\}}{\sqrt{\sum_{m=1}^{M}(FtVal_{f,m} - \frac{\sum_{m=1}^{M} FtVal_{f,m}}{M})^2 \times \sum_{m=1}^{M}(StdVal_{f,m} - \frac{\sum_{m=1}^{M} StdVal_{f,m}}{M})^2}}$$

where $StdVec_f$ is the feature vector of the $f$-th face image in the reference image sequence, and $StdVec_f = (StdVal_{f,1}, StdVal_{f,2}, ..., Stdval_{f,m}, ..., StdVal_{f,M})$, $StdVal_{f,m}$ is the $m$-th feature distance of the $f$-th face image in the reference image sequence, $Abs$ is the absolute value function, $SimDeg_f$ is the matching degree of the $f$-th face image in the face image sequence and the $f$-th face image in the reference image sequence.

After calculating the matching degree of the $f$-th face image in the face image sequence and the $f$-th face image in the reference image sequence through the steps as shown in FIG. 3, the matching degree of the face image sequence and the reference image sequence may be calculated according to the following formula:

$$SrSimDeg = \sum_{f=1}^{F}[\frac{(\sum_{f=1}^{F} SimDeg_f) - SimDeg_f}{(\sum_{f=1}^{F} SimDeg_f) \times (F-1)} \times SimDeg_f]$$

where $SrSimDeg$ is the matching degree of the face image sequence and the preset reference image sequence. It can be seen from this formula that if the matching degree of a certain face images is smaller, its weight in calculating the matching degree of the image sequences will be greater; on the contrary, if the matching degree of a certain face images is greater, its weight when calculating the matching degree of the image sequences is the smaller. Therefore, as long as there is one face image with a very small matching degree in the image sequences, the overall matching degree of the image sequences will also be provided with a relatively small value.

Step S105: determine whether the matching degree of the face image sequence and the preset reference image sequence is greater than a preset matching degree threshold.

The matching degree threshold may be set according to actual conditions, for example, it may be set as 80%, 90%, 95% or other values. If the matching degree of the face image sequence and the preset reference image sequence is greater than the preset matching degree threshold, then step S106 is executed; if the matching degree of the face image sequence and the preset reference image sequence is less than or equal to the matching degree threshold, then step S107 is executed.

Step S106: determine that the identity recognition successes.

Step S107: determine that the identity recognition fails.

In summary, on the basis of conventional face recognition, the embodiment of the present application further collects a series of multiple face images, that is, the face image sequences, and calculates the matching degrees of the face image sequences and the preset reference image sequence, and determines that the identity recognition successes only when the two image sequences are relatively similar, that is, the matching degree of the two is greater than the preset matching degree threshold. Since the reference image sequence contains the face images with different expressions, the identity recognition fails even if the illegal people obtains a photo of the legitimate user, therefore the security is greatly improved.

Corresponding to the identity recognition method described in the above embodiment, FIG. 5 shows an exemplary structure diagram of an identity recognition apparatus provided in an embodiment of the present application.

In this embodiment, the identity recognition apparatus may include:

a face recognition module 501 configured to collect face images and perform face recognition on the face images;

an image sequence collection module 502 configured to collect a face image sequence if the face recognition is successful, here the face image sequence includes F face images, where F is an integer greater than 1;

a sequence matching degree calculation module 503 configured to calculate a matching degree of the face image sequence and a preset reference image sequence, here the reference image sequence includes F face images, and expressions in at least two face images are different;

an identity determination module 504 configured to determine that the identity recognition successes if the matching degree of the face image sequence and the preset reference image sequence is greater than a preset matching degree threshold.

Further, the identity recognition apparatus may further include:

a random number generation module configured to generate a random number through a preset pseudo-random number generator;

a sequence identifier calculation module configured to calculate a sequence identifier of the reference image sequence in a preset image sequence set according to the following formula:

$$EmoSeqNum = MOD(RandomNum, N)$$

where, $MOD$ is a remainder function, $RandomNum$ is the random number, $N$ is the total number of the image sequences in the image sequence set, and $EmoSeqNum$ is the sequence identifier of the reference image sequence in the image sequence set;

a reference image sequence selection module configured to select the reference image sequence from the image sequence set according to the sequence identifier.

Further, the sequence matching degree calculation module may include:

a first calculation unit configured to calculate a matching degree of an $f$-th face image in the face image sequence and an $f$-th face image in the reference image sequence, where $1 \le f \le F$;

a second calculation unit configured to calculate the matching degree of the face image sequence and the reference image sequence.

Further, the first calculation unit may include:

a feature distance calculation subunit configured to calculate feature distances of the $f$-th face image in the face image sequence respectively, here the feature distance is a distance between center points of any two feature regions;

a feature vector construction subunit configured to construct the feature distances as a feature vector of the $f$-th face image in the face image sequence;

a matching degree calculation subunit configured to calculate the matching degree of the $f$-th face image in the face image sequence and the $f$-th face image in the reference image sequence.

Those skilled in the art can clearly understand that, for the convenience and conciseness of the description, the specific working processes of the apparatus, modules and units described above may refer to the corresponding processes in the foregoing method embodiments, which will not be repeated herein again.

In the above-mentioned embodiments, the description for each of the embodiments has its own focus. For parts that are not detailed or recorded in a certain embodiment, reference may be made to related descriptions of other embodiments.

FIG. 6 shows a schematic block diagram of a terminal device provided by an embodiment of the present application. For ease of description, only parts related to this embodiment of the present application are shown.

In this embodiment, the terminal device 6 may be a computing device such as a desktop computer, a notebook, a palmtop computer, and a cloud server and the like. The terminal device 6 may include: a processor 60, a memory 61, and a computer-readable instruction 62 stored in the memory 61 and executable on the processor 60, such as the computer-readable instruction for executing the above-mentioned identity recognition method. The processor 60, when executing the computer-readable instruction 62, implements the steps in the embodiments of the above-mentioned identity recognition methods.

If the functional units in each of the embodiments of the present application are implemented in the form of software functional units and sold or used as an independent product, they may be stored in a computer-readable storage medium. Based on such understanding, the technical solutions of the present application, or in other word the part of the technical solutions of the present application that contributes to the existing technology, or all or part of the technical solutions may essentially be embodied in the form of a software product, and the computer software product, which includes several computer-readable instructions to enable a computer device (which may be a personal computer, a server, or a network device, etc.) to perform all or part of the steps of the method described in each embodiment of the present application, is stored in the storage medium. The aforementioned storage medium includes any kind of medium capable of storing the computer-readable instruction, such as a U disk, a mobile hard disk, a ROM (read-only memory), a RAM (random access memory), a magnetic disk or an optical disk, etc.

**Claims**

1. An identity recognition method, **characterized in that**, the method comprises:

   collecting face images and performing face recognition on the face images;
   collecting a face image sequence if face recognition is successful, wherein the face image sequence comprises F face images, where F is an integer greater than 1;
   calculating a matching degree of the face image sequence and a preset reference image sequence, wherein the reference image sequence comprises F face images, and expressions in at least two face images are different;
   determining that identity recognition successes if the matching degree of the face image sequence and the preset reference image sequence is greater than a preset matching degree threshold.

2. The identity recognition method according to claim 1, wherein before calculating the matching degree of the face image sequence and the preset reference image sequence, the method further comprises:

   generating a random number through a preset pseudo-random number generator;
   calculating a sequence identifier of the reference image sequence in a preset image sequence set according to the following formula:

   $$EmoSeqNum = MOD(RandomNum, N)$$

   where, $MOD$ is a remainder function, $RandomNum$ is the random number, $N$ is a total number of the image sequences in the image sequence set, and $EmoSeqNum$ is the sequence identifier of the reference image sequence in the image sequence set;
   selecting the reference image sequence from the image sequence set according to the sequence identifier.

3. The identity recognition method according to claim 1, wherein the step of calculating the matching degree of the face image sequence and the preset reference image sequence comprises:

   calculating a matching degree of an $f$-th face image in the face image sequence and an $f$-th face image in the reference image sequence, where $1 \leq f \leq F$;

calculating the matching degree of the face image sequence and the reference image sequence according to the following formula:

$$SrSimDeg = \sum_{f=1}^{F}[\frac{(\sum_{f=1}^{F} SimDeg_f) - SimDeg_f}{(\sum_{f=1}^{F} SimDeg_f) \times (F-1)} \times SimDeg_f]$$

where $SimDeg_f$ is the matching degree of an $f$-th face image in the face image sequence and the $f$-th face image in the reference image sequence, and $SrSimDeg$ is the matching degree of the face image sequence and the preset reference image sequence.

4. The identity recognition method according to claim 3, wherein the step of calculating the matching degree of the $f$-th face image in the face image sequence and the $f$-th face image in the reference image sequence comprises:

calculating feature distances of the $f$-th face image in the face image sequence respectively, wherein the feature distance is a distance between center points of any two feature regions;
constructing the feature distances as a feature vector of the $f$-th face image in the face image sequence according to the following formula:

$$FeatureVec_f = (FtVal_{f,1}, FtVal_{f,2}, ..., FtVal_{f,m}, ..., FtVal_{f,M})$$

where $m$ is a serial number of the feature distance, $1 \leq m \leq M$, and $M$ is a total number of the feature distances, and $FtVal_{f,m}$ is an $m$-th feature distance of the $f$-th face image in the face image sequence;
calculating the matching degree of the $f$-th face image in the face image sequence and the $f$-th face image in the reference image sequence according to the following formula:

$$SimDeg_f = 1 - \frac{Abs\{\sum_{m=1}^{M}[(FtVal_{f,m} - \frac{\sum_{m=1}^{M} FtVal_{f,m}}{M}) \times (StdVal_{f,m} - \frac{\sum_{m=1}^{M} StdVal_{f,m}}{M})]\}}{\sqrt{\sum_{m=1}^{M}(FtVal_{f,m} - \frac{\sum_{m=1}^{M} FtVal_{f,m}}{M})^2 \times \sum_{m=1}^{M}(StdVal_{f,m} - \frac{\sum_{m=1}^{M} StdVal_{f,m}}{M})^2}}$$

where $StdVec_f$ is the feature vector of the $f$-th face image in the reference image sequence, and $StdVec_f = (StdVal_{f,1}, StdVal_{f,2}, ..., StdVal_{f,m}, ..., StdVal_{f,M})$, $StdVal_{f,m}$ is the $m$-th feature distance of the $f$-th face image in the reference image sequence, $Abs$ is an absolute value function.

5. The identity recognition method according to claim 4, wherein the step of calculating the feature distances of the $f$-th face image in the face image sequence respectively comprises:
calculating the feature distances of the $f$-th face image in the face image sequence according to the following formula:

$$FtVal_{f,m} = \sqrt{(AveXL_{f,m} - AveXR_{f,m})^2 + (AveYL_{f,m} - AveYR_{f,m})^2}$$

$$= \sqrt{\left(\frac{\sum_{ln=1}^{LN_{f,m}} xl_{f,m,ln}}{LN_{f,m}} - \frac{\sum_{rn=1}^{RN_{f,m}} xr_{f,m,rn}}{RN_{f,m}}\right)^2 + \left(\frac{\sum_{ln=1}^{LN_{f,m}} yl_{f,m,ln}}{LN_{f,m}} - \frac{\sum_{rn=1}^{RN_{f,m}} yr_{f,m,rn}}{RN_{f,m}}\right)^2}$$

where $LN_{f,m}$ is a number of pixels in a first feature area of the f-th face image in the face image sequence, $(xl_{f,m,ln}, yl_{f,m,ln})$ is a coordinate of an ln-th pixel point in the first feature area, $1 \leq ln \leq LN_{f,m}$, $RN_{f,m}$ is a number of pixels in a second feature area of the f-th face image in the face image sequence, $(xr_{f,m,rn}, yr_{f,m,rn})$ is a coordinate of a rn-th pixel point of the first feature area, $1 \leq rn \leq RN_{f,m}$, $(AveXL_{f,m}, AveYL_{f,m})$ is a coordinate of the center point of the

$$AveXL_{f,m} = \frac{\sum_{ln=1}^{LN_{f,m}} xl_{f,m,ln}}{LN_{f,m}} \qquad AveYL_{f,m} = \frac{\sum_{ln=1}^{LN_{f,m}} yl_{f,m,ln}}{LN_{f,m}}$$

first feature area, and , $(AveXR_{f,m}, AveYR_{f,m})$ is a coor-

$$AveXR_{f,m} = \frac{\sum_{rn=1}^{RN_{f,m}} xr_{f,m,rn}}{RN_{f,m}}$$

dinate of the center point of the second feature region, and

$$AveYR_{f,m} = \frac{\sum_{rn=1}^{RN_{f,m}} yr_{f,m,rn}}{RN_{f,m}}$$

.

6. A computer-readable storage medium with a computer-readable instruction stored thereon, **characterized in that**, the computer-readable instruction, when executed by a processor, implements the following steps of:

   collecting face images and performing face recognition on the face images;
   collecting a face image sequence if face recognition is successful, wherein the face image sequence comprises F face images, where F is an integer greater than 1;
   calculating a matching degree of the face image sequence and a preset reference image sequence, wherein the reference image sequence comprises F face images, and expressions in at least two face images are different;
   determining that identity recognition successes if the matching degree of the face image sequence and the preset reference image sequence is greater than a preset matching degree threshold.

7. The computer-readable storage medium according to claim 6, wherein before calculating the matching degree of the face image sequence and the preset reference image sequence, the steps further comprise:

   generating a random number through a preset pseudo-random number generator;
   calculating a sequence identifier of the reference image sequence in a preset image sequence set according to the following formula:

$$EmoSeqNum = MOD(RandomNum, N)$$

   where, MOD is a remainder function, RandomNum is the random number, N is a total number of the image sequences in the image sequence set, and EmoSeqNum is the sequence identifier of the reference image sequence in the image sequence set;
   selecting the reference image sequence from the image sequence set according to the sequence identifier.

8. The computer-readable storage medium according to claim 6, wherein the step of calculating the matching degree of the face image sequence and the preset reference image sequence comprises:

   calculating a matching degree of an f-th face image in the face image sequence and an f-th face image in the reference image sequence, where $1 \leq f \leq F$;
   calculating the matching degree of the face image sequence and the reference image sequence according to the following formula:

$$SrSimDeg = \sum_{f=1}^{F} \left[ \frac{(\sum_{f=1}^{F} SimDeg_f) - SimDeg_f}{(\sum_{f=1}^{F} SimDeg_f) \times (F-1)} \times SimDeg_f \right]$$

where $SimDeg_f$ is the matching degree of an $f$-th face image in the face image sequence and the $f$-th face image in the reference image sequence, and $SrSimDeg$ is the matching degree of the face image sequence and the preset reference image sequence.

9.  The computer-readable storage medium according to claim 8, wherein the step of calculating the matching degree of the $f$-th face image in the face image sequence and the $f$-th face image in the reference image sequence comprises:

    calculating feature distances of the $f$-th face image in the face image sequence respectively, wherein the feature distance is a distance between center points of any two feature regions;
    constructing the feature distances as a feature vector of the $f$-th face image in the face image sequence according to the following formula:

$$FeatureVec_f = (FtVal_{f,1}, FtVal_{f,2}, ..., FtVal_{f,m}, ..., FtVal_{f,M})$$

where $m$ is a serial number of the feature distance, $1 \le m \le M$, and $M$ is a total number of the feature distances, and $FtVal_{f,m}$ is an $m$-th feature distance of the $f$-th face image in the face image sequence;
calculating the matching degree of the $f$-th face image in the face image sequence and the $f$-th face image in the reference image sequence according to the following formula:

$$SimDeg_f = 1 - \frac{Abs\left\{ \sum_{m=1}^{M} \left[ \left( FtVal_{f,m} - \frac{\sum_{m=1}^{M} FtVal_{f,m}}{M} \right) \times \left( StdVal_{f,m} - \frac{\sum_{m=1}^{M} StdVal_{f,m}}{M} \right) \right] \right\}}{\sqrt{\sum_{m=1}^{M} \left( FtVal_{f,m} - \frac{\sum_{m=1}^{M} FtVal_{f,m}}{M} \right)^2 \times \sum_{m=1}^{M} \left( StdVal_{f,m} - \frac{\sum_{m=1}^{M} StdVal_{f,m}}{M} \right)^2}}$$

where $StdVec_f$ is the feature vector of the $f$-th face image in the reference image sequence, and $StdVec_f = (StdVal_{f,1}, StdVal_{f,2}, ..., StdVal_{f,m}, ..., StdVal_{f,M})$, $StdVal_{f,m}$ is the $m$-th feature distance of the $f$-th face image in the reference image sequence, $Abs$ is an absolute value function.

10. The computer-readable storage medium according to claim 9, wherein the step of calculating the feature distances of the $f$-th face image in the face image sequence respectively comprises:
    calculating the feature distances of the $f$-th face image in the face image sequence according to the following formula:

$$FtVal_{f,m} = \sqrt{\left( AveXL_{f,m} - AveXR_{f,m} \right)^2 + \left( AveYL_{f,m} - AveYR_{f,m} \right)^2}$$

$$= \sqrt{\left( \frac{\sum_{ln=1}^{LN_{f,m}} xl_{f,m,ln}}{LN_{f,m}} - \frac{\sum_{rn=1}^{RN_{f,m}} xr_{f,m,rn}}{RN_{f,m}} \right)^2 + \left( \frac{\sum_{ln=1}^{LN_{f,m}} yl_{f,m,ln}}{LN_{f,m}} - \frac{\sum_{rn=1}^{RN_{f,m}} yr_{f,m,rn}}{RN_{f,m}} \right)^2}$$

where $LN_{f,m}$ is a number of pixels in a first feature area of the $f$-th face image in the face image sequence, $(xl_{f,m,ln}, yl_{f,m,ln})$ is a coordinate of an $ln$-th pixel point in the first feature area, $1 \le ln \le LN_{f,m}$, $RN_{f,m}$ is a number of pixels in a second feature area of the *f*-th face image in the face image sequence, $(xr_{f,m,rn}, yr_{f,m,rn})$ is a coordinate of a *rn*-th pixel point of the first feature area, $1 \leq rn \leq RN_{f,m}$, $(AveXL_{f,m}, AveYL_{f,m})$ is a coordinate of the center point of the

$$AveXL_{f,m} = \frac{\sum_{ln=1}^{LN_{f,m}} xl_{f,m,ln}}{LN_{f,m}} \qquad AveYL_{f,m} = \frac{\sum_{ln=1}^{LN_{f,m}} yl_{f,m,ln}}{LN_{f,m}}$$

first feature area, and , $(AveXR_{f,m}, AveYR_{f,m})$ is a coor-

$$AveXR_{f,m} = \frac{\sum_{rn=1}^{RN_{f,m}} xr_{f,m,rn}}{RN_{f,m}}$$

dinate of the center point of the second feature region, and

$$AveYR_{f,m} = \frac{\sum_{rn=1}^{RN_{f,m}} yr_{f,m,rn}}{RN_{f,m}}$$

.

11. A terminal device, comprising a memory, a processor, and a computer-readable instruction stored in the memory and executable on the processor, **characterized in that**, the processor, when executing the computer-readable instruction, implements the following steps of:

   collecting face images and performing face recognition on the face images;
   collecting a face image sequence if face recognition is successful, wherein the face image sequence comprises F face images, where F is an integer greater than 1;
   calculating a matching degree of the face image sequence and a preset reference image sequence, wherein the reference image sequence comprises F face images, and expressions in at least two face images are different;
   determining that identity recognition successes if the matching degree of the face image sequence and the preset reference image sequence is greater than a preset matching degree threshold.

12. The terminal device according to claim 11, wherein before calculating the matching degree of the face image sequence and the preset reference image sequence, the steps further comprise:

   generating a random number through a preset pseudo-random number generator;
   calculating a sequence identifier of the reference image sequence in a preset image sequence set according to the following formula:

$$EmoSeqNum = MOD(RandomNum, N)$$

   where, *MOD* is a remainder function, *RandomNum* is the random number, *N* is a total number of the image sequences in the image sequence set, and *EmoSeqNum* is the sequence identifier of the reference image sequence in the image sequence set;
   selecting the reference image sequence from the image sequence set according to the sequence identifier.

13. The terminal device according to claim 11, wherein the step of calculating the matching degree of the face image sequence and the preset reference image sequence comprises:

   calculating a matching degree of an *f*-th face image in the face image sequence and an *f*-th face image in the reference image sequence, where $1 \leq f \leq F$;
   calculating the matching degree of the face image sequence and the reference image sequence according to the following formula:

$$SrSimDeg = \sum_{f=1}^{F}[\frac{(\sum_{f=1}^{F}SimDeg_{f})-SimDeg_{f}}{(\sum_{f=1}^{F}SimDeg_{f})\times(F-1)}\times SimDeg_{f}]$$

where $SimDeg_f$ is the matching degree of an $f$-th face image in the face image sequence and the $f$-th face image in the reference image sequence, and $SrSimDeg$ is the matching degree of the face image sequence and the preset reference image sequence.

14. The terminal device according to claim 13, wherein the step of calculating the matching degree of the $f$-th face image in the face image sequence and the $f$-th face image in the reference image sequence comprises:

calculating feature distances of the $f$-th face image in the face image sequence respectively, wherein the feature distance is a distance between center points of any two feature regions;
constructing the feature distances as a feature vector of the $f$-th face image in the face image sequence according to the following formula:

$$FeatureVec_f = (FtVal_{f,1}, FtVal_{f,2},..., FtVal_{f,m},..., FtVal_{f,M})$$

where $m$ is a serial number of the feature distance, $1 \le m \le M$, and $M$ is a total number of the feature distances, and $FtVal_{f,m}$ is an $m$-th feature distance of the $f$-th face image in the face image sequence;
calculating the matching degree of the $f$-th face image in the face image sequence and the $f$-th face image in the reference image sequence according to the following formula:

$$SimDeg_f = 1 - \frac{Abs\{\sum_{m=1}^{M}[(FtVal_{f,m}-\frac{\sum_{m=1}^{M}FtVal_{f,m}}{M})\times(StdVal_{f,m}-\frac{\sum_{m=1}^{M}StdVal_{f,m}}{M})]\}}{\sqrt{\sum_{m=1}^{M}(FtVal_{f,m}-\frac{\sum_{m=1}^{M}FtVal_{f,m}}{M})^2\times\sum_{m=1}^{M}(StdVal_{f,m}-\frac{\sum_{m=1}^{M}StdVal_{f,m}}{M})^2}}$$

where $StdVec_f$ is the feature vector of the $f$-th face image in the reference image sequence, and $StdVec_f =$ ($StdVal_{f,1}, StdVal_{f,2},..., StdVal_{f,m},..., StdVal_{f,M}$), $StdVal_{f,m}$ is the $m$-th feature distance of the $f$-th face image in the reference image sequence, $Abs$ is an absolute value function.

15. The terminal device according to claim 14, wherein the step of calculating the feature distances of the $f$-th face image in the face image sequence respectively comprises:
calculating the feature distances of the $f$-th face image in the face image sequence according to the following formula:

$$FtVal_{f,m} = \sqrt{(AveXL_{f,m}-AveXR_{f,m})^2 + (AveYL_{f,m}-AveYR_{f,m})^2}$$

$$= \sqrt{(\frac{\sum_{ln=1}^{LN_{f,m}}xl_{f,m,ln}}{LN_{f,m}}-\frac{\sum_{rn=1}^{RN_{f,m}}xr_{f,m,rn}}{RN_{f,m}})^2 + (\frac{\sum_{ln=1}^{LN_{f,m}}yl_{f,m,ln}}{LN_{f,m}}-\frac{\sum_{rn=1}^{RN_{f,m}}yr_{f,m,rn}}{RN_{f,m}})^2}$$

where $LN_{f,m}$ is a number of pixels in a first feature area of the $f$-th face image in the face image sequence, $(xl_{f,m,ln},$ $yl_{f,m,ln})$ is a coordinate of an $ln$-th pixel point in the first feature area, $1 \le ln \le LN_{f,m}$, $RN_{f,m}$ is a number of pixels in a second feature area of the $f$-th face image in the face image sequence, $(xr_{f,m,rn}, yr_{f,m,rn})$ is a coordinate of a $rn$-th pixel point of the first feature area, $1 \le rn \le RN_{f,m}$, $(AveXL_{f,m}, AveYL_{f,m})$ is a coordinate of the center point of the

$$AveXL_{f,m} = \frac{\sum_{ln=1}^{LN_{f,m}} xl_{f,m,ln}}{LN_{f,m}} \qquad AveYL_{f,m} = \frac{\sum_{ln=1}^{LN_{f,m}} yl_{f,m,ln}}{LN_{f,m}}$$

first feature area, and , $(AveXR_{f,m}, AveYR_{f,m})$ is a coor-

$$AveXR_{f,m} = \frac{\sum_{rn=1}^{RN_{f,m}} xr_{f,m,rn}}{RN_{f,m}}$$

dinate of the center point of the second feature region, and

$$AveYR_{f,m} = \frac{\sum_{rn=1}^{RN_{f,m}} yr_{f,m,rn}}{RN_{f,m}} .$$

16. An identity recognition apparatus, **characterized in that**, the identity recognition apparatus comprises:

a face recognition module configured to collect face images and perform face recognition on the face images;
an image sequence collection module configured to collect a face image sequence if the face recognition is successful, wherein the face image sequence comprises F face images, where F is an integer greater than 1;
a sequence matching degree calculation module configured to calculate a matching degree of the face image sequence and a preset reference image sequence, wherein the reference image sequence comprises F face images, and expressions in at least two face images are different;
an identity determination module configured to determine that identity recognition successes if the matching degree of the face image sequence and the preset reference image sequence is greater than a preset matching degree threshold.

17. The identity recognition apparatus according to claim 16, wherein the identity recognition apparatus further comprises:

a random number generation module configured to generate a random number through a preset pseudo-random number generator;
a sequence identifier calculation module configured to calculate a sequence identifier of the reference image sequence in a preset image sequence set according to the following formula:

$$EmoSeqNum = MOD(RandomNum, N)$$

where, $MOD$ is a remainder function, $RandomNum$ is the random number, $N$ is a total number of the image sequences in the image sequence set, and $EmoSeqNum$ is the sequence identifier of the reference image sequence in the image sequence set;
a reference image sequence selection module configured to select the reference image sequence from the image sequence set according to the sequence identifier.

18. The identity recognition apparatus according to claim 16, wherein the sequence matching degree calculation module comprises:

a first calculation unit configured to calculate a matching degree of an $f$-th face image in the face image sequence and an $f$-th face image in the reference image sequence, where $1 \le f \le F$;
a second calculation unit configured to calculate the matching degree of the face image sequence and the reference image sequence according to the following formula:

$$SrSimDeg = \sum_{f=1}^{F} \left[ \frac{(\sum_{f=1}^{F} SimDeg_f) - SimDeg_f}{(\sum_{f=1}^{F} SimDeg_f) \times (F-1)} \times SimDeg_f \right]$$

where $SimDeg_f$ is the matching degree of an $f$-th face image in the face image sequence and the $f$-th face image in the reference image sequence, and $SrSimDeg$ is the matching degree of the face image sequence and the preset reference image sequence.

19. The identity recognition apparatus according to claim 18, wherein the first calculation unit comprises:

a feature distance calculation subunit configured to calculate feature distances of the $f$-th face image in the face image sequence respectively, wherein the feature distance is a distance between center points of any two feature regions;
a feature vector construction subunit configured to construct the feature distances as a feature vector of the $f$-th face image in the face image sequence according to the following formula:

$$FeatureVec_f = (FtVal_{f,1}, FtVal_{f,2}, \ldots, FtVal_{f,m}, \ldots, FtVal_{f,M})$$

where $m$ is a serial number of the feature distance, $1 \le m \le M$, and $M$ is a total number of the feature distances, and $FtVal_{f,m}$ is an $m$-th feature distance of the $f$-th face image in the face image sequence;
a matching degree calculation subunit configured to calculate the matching degree of the $f$-th face image in the face image sequence and the $f$-th face image in the reference image sequence according to the following formula:

$$SimDeg_f = 1 - \frac{Abs\left\{ \sum_{m=1}^{M} \left[ \left( FtVal_{f,m} - \frac{\sum_{m=1}^{M} FtVal_{f,m}}{M} \right) \times \left( StdVal_{f,m} - \frac{\sum_{m=1}^{M} StdVal_{f,m}}{M} \right) \right] \right\}}{\sqrt{\sum_{m=1}^{M} \left( FtVal_{f,m} - \frac{\sum_{m=1}^{M} FtVal_{f,m}}{M} \right)^2 \times \sum_{m=1}^{M} \left( StdVal_{f,m} - \frac{\sum_{m=1}^{M} StdVal_{f,m}}{M} \right)^2}}$$

where $StdVec_f$ is the feature vector of the $f$-th face image in the reference image sequence, and $StdVec_f = (StdVal_{f,1}, StdVal_{f,2}, \ldots, StdVal_{f,m}, \ldots, StdVal_{f,M})$, $StdVal_{f,m}$ is the $m$-th feature distance of the $f$-th face image in the reference image sequence, $Abs$ is an absolute value function.

20. The identity recognition apparatus according to claim 19, wherein the feature distance calculation subunit calculates the feature distances of the $f$-th face image in the face image sequence according to the following formula:

$$FtVal_{f,m} = \sqrt{\left( AveXL_{f,m} - AveXR_{f,m} \right)^2 + \left( AveYL_{f,m} - AveYR_{f,m} \right)^2}$$

$$= \sqrt{\left( \frac{\sum_{ln=1}^{LN_{f,m}} xl_{f,m,ln}}{LN_{f,m}} - \frac{\sum_{rn=1}^{RN_{f,m}} xr_{f,m,rn}}{RN_{f,m}} \right)^2 + \left( \frac{\sum_{ln=1}^{LN_{f,m}} yl_{f,m,ln}}{LN_{f,m}} - \frac{\sum_{rn=1}^{RN_{f,m}} yr_{f,m,rn}}{RN_{f,m}} \right)^2}$$

where $LN_{f,m}$ is a number of pixels in a first feature area of the $f$-th face image in the face image sequence, $(xl_{f,m,ln}, yl_{f,m,ln})$ is a coordinate of an $ln$-th pixel point in the first feature area, $1 \le ln \le LN_{f,m}$, $RN_{f,m}$ is a number of pixels in a second feature area of the $f$-th face image in the face image sequence, $(xr_{f,m,rn}, yr_{f,m,rn})$ is a coordinate of a $rn$-th pixel point of the first feature area, $1 \le rn \le RN_{f,m}$, $(AveXL_{f,m}, AveYL_{f,m})$ is a coordinate of the center point of the

$$AveXL_{f,m} = \frac{\sum_{ln=1}^{LN_{f,m}} xl_{f,m,ln}}{LN_{f,m}} \qquad AveYL_{f,m} = \frac{\sum_{ln=1}^{LN_{f,m}} yl_{f,m,ln}}{LN_{f,m}}$$

first feature area, and , $(AveXR_{f,m}, AveYR_{f,m})$ is a coor-

$$AveXR_{f,m} = \frac{\sum_{rn=1}^{RN_{f,m}} xr_{f,m,rn}}{RN_{f,m}}$$

dinate of the center point of the second feature region, and

$$AveYR_{f,m} = \frac{\sum_{rn=1}^{RN_{f,m}} yr_{f,m,rn}}{RN_{f,m}}$$

.

S101

collect face images and performing face
recognition on the face images

S102

No

determine whether the face
recognition is successful

Yes

S103

collect face image sequences

S104

calculate a matching degree of the face
image sequence and the reference image
sequence

S105

No

determine
whether the matching
degree of the face image sequence and the
preset reference image sequence is greater
than a preset matching degree
threshold

Yes

S106

determine that the identity recognition
successes

S107

determine that the identity recognition fails

FIG. 1

generate a random number through a preset pseudo-random number generator ⌐ S201

↓

calculate a sequence identifier of the reference image sequence in the image sequence set ⌐ S202

↓

select the reference image sequence from the image sequence set according to the sequence identifier ⌐ S203

FIG. 2

calculate feature distances of the $f$-th face image in the face image sequence ⌐ S301

↓

construct the feature distances as a feature vector of the $f$-th face image in the face image sequence ⌐ S302

↓

calculate the matching degree of the $f$-th face image in the face image sequence and the $f$-th face image in the reference image sequence ⌐ S303

FIG. 3

$d_1$

$d_2$

$d_3$

$d_4$

FIG. 4

**identity recognition apparatus**

| face recognition module | ⌐ 501 |

| image sequence collection module | ⌐ 502 |

| sequence matching degree calculation module | ⌐ 503 |

| identity determination module | ⌐ 504 |

FIG. 5

6

60

memory

61

62

computer-readable instruction

processor

terminal device

## INTERNATIONAL SEARCH REPORT

| International application No. |
| --- |
| **PCT/CN2018/123787** |

**A. CLASSIFICATION OF SUBJECT MATTER**

G06K 9/00(2006.01)i

According to International Patent Classification (IPC) or to both national classification and IPC

**B. FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT, CNKI, WPI, EPODOC: 人脸识别, 图像序列, 帧, 阈值, 匹配, face recognition, image sequence, frame, threshold value, match+

**C. DOCUMENTS CONSIDERED TO BE RELEVANT**

| Category* | Citation of document, with indication, where appropriate, of the relevant passages | Relevant to claim No. |
| --- | --- | --- |
| X | CN 103258191 A (SUZHOU FUFENG SCIENCE & TECHNOLOGY CO., LTD.) 21 August 2013 (2013-08-21) description, paragraphs [0005]-[0025], and figures 1 and 2 | 1, 2, 6, 7, 11, 12, 16, 17 |
| A | CN 108363999 A (BAIDU ONLINE NETWORK TECHNOLOGY BEIJING CO., LTD.) 03 August 2018 (2018-08-03) entire document | 1-20 |
| A | CN 103279768 A (BEIHANG UNIVERSITY) 04 September 2013 (2013-09-04) entire document | 1-20 |
| A | US 2005273328 A1 (STMICROELECTRONICS ASIA PACIFIC PTE. LTD.) 08 December 2005 (2005-12-08) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 June 2019** | **24 June 2019** |

| Name and mailing address of the ISA/CN | Authorized officer |
| --- | --- |
| **National Intellectual Property Administration, PRC (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/123787**

| Patent document cited in search report | | | Publication date (day/month/year) | Patent family member(s) | Publication date (day/month/year) |
|---|---|---|---|---|---|
| CN | 103258191 | A | 21 August 2013 | None | |
| CN | 108363999 | A | 03 August 2018 | None | |
| CN | 103279768 | A | 04 September 2013 | None | |
| US | 2005273328 | A1 | 08 December 2005 | None | |

Form PCT/ISA/210 (patent family annex) (January 2015)

**EP 3 859 591 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811121965